# EUROPÄISCHE PATENTSCHRIFT

(11) **EP 3 783 307 B1**
(45) Veröffentlichungstag und Bekanntmachung des Hinweises auf die Patenterteilung: **19.06.2024**
(21) Anmeldenummer: 19192968.6
(22) Anmeldetag: 21.08.2019
(51) Int. Cl.: G01C 9/18, G01C 5/06

(54) **NEIGUNGSSENSOR ZUR NEIGUNGSBESTIMMUNG**
TILT SENSOR FOR TILT DETERMINATION
CAPTEUR D'INCLINAISON DESTINÉ À LA DÉTERMINATION D'INCLINAISON

(43) Veröffentlichungstag der Anmeldung: 24.02.2021
(73) Patentinhaber: Hexagon Technology Center GmbH, 9435 Heerbrugg (CH)
(72) Erfinder: WENK, Markus, 7000 Chur (CH); REBHANDL, Wolfgang, 6850 Dornbirn (AT)
(74) Vertreter: Kaminski Harmann

(56) Entgegenhaltungen:
- EP-A1- 3 264 035
- CN-U- 201 680 836
- DE-A1- 4 326 706
- DE-A1- 19 914 727
- US-A1- 2015 292 885

## Beschreibung

### -FACHGEBIET DER ERFINDUNG-

Die Erfindung betrifft einen Neigungssensor zur ein- und/oder mehrachsigen Bestimmung einer Neigung in Bezug auf die vom Gravitationsfeld vorgegebene Lotrichtung.

### -HINTERGRUND-

In der Geodäsie und im Baugewerbe weisen viele Messinstrumente Sensoren auf um die Neigung zu messen, insbesondere um den Neigungswinkel, in Bezug auf die von dem Gravitationsfeld vorgegebene Lotrichtung zu bestimmen. In den meisten Fällen werden diese Messgeräte benutzt um beispielsweise die Lage eines Objekts oder einer Fläche zu ermitteln. Es existiert eine Vielzahl an solchen Messgeräten, welche in Abhängigkeit von der jeweiligen Messgenauigkeit unterschiedlich komplex aufgebaut sind. Was bisher jedoch fehlt, ist ein Neigungssensor, welcher kostengünstig und präzise ein- oder mehrachsig den Neigungswinkel bzw. die Neigung in Bezug auf die Lotrichtung über den vollen Bereich von 360° Grad messen kann. DE 43 26 706 A1 offenbart ein Verfahren zur Messung von vertikaler Lage von Objekten mit Hilfe von Druckmeßsensoren. CN 2016 80836U offenbart einen Neigungssensor umfassend zwei Drucksensoren.

Es ist deshalb eine Aufgabe der vorliegenden Erfindung einen Neigungssensor zur ein- und /oder mehrachsigen Neigungsbestimmung bereitzustellen, welcher kostengünstig realisiert werden kann und präzise über den vollen Messbereich von 360° um die Lotrichtung messen kann.

### -BESCHREIBUNG DER ERFINDUNG-

Die Erfindung betrifft einen Neigungssensor zur Bestimmung eines Neigungswinkels bzw. einer Neigung in Bezug auf die vom Gravitationsfeld vorgegebene Lotrichtung. Dabei weist der Neigungssensor einen Flüssigkeitsbehälter, gefüllt mit einer gegen eine äussere Atmosphäre vom Flüssigkeitsbehälter gasdicht abgeschlossene Flüssigkeit als Verbindungsflüssigkeit, ein erstes Drucksensorpaar aufweisend einen ersten und zweiten Drucksensor, wobei der erste und der zweite Drucksensor in einem Randbereich des Flüssigkeitsbehälters so angeordnet sind, dass sie über die Verbindungsflüssigkeit miteinander verbunden sind, und eine fixe und definierte Positionsrelation und somit einen fixen und definierten Abstand zueinander aufweisen, und wobei der erste und der zweite Drucksensor dazu konfiguriert sind jeweils einen hydrostatischen Druck in der Verbindungsflüssigkeit zu messen, und einen Prozessor, welcher dazu konfiguriert ist, eine relative Höhe h in Gravitationsrichtung zwischen dem ersten und dem zweiten Drucksensor basierend auf den vom ersten und vom zweiten Drucksensor gemessenen hydrostatischen Drücken zu bestimmen, wobei die gemessenen hydrostatischen Drücke durch den Prozessor einem gleichen gemeinsamen Messzeitpunkt zuordenbar sind, und einen Neigungswinkel in Bezug auf die Lotrichtung basierend auf der bestimmten relativen Höhe und dem fixen und definierten Abstand der Drucksensoren zueinander zu bestimmen, auf.

Dabei kann der Prozessor auch dazu konfiguriert sein eine relative Höhe zwischen einem ersten Referenzpunkt mit einer fixen und definierten Positionsrelation zu dem ersten Drucksensor und einem zweiten Referenzpunkt mit einer fixen und definierten Positionsrelation zu dem zweiten Drucksensor basierend auf den vom ersten und vom zweiten Drucksensor gemessenen hydrostatischen Drücken zu bestimmen. Der Neigungswinkel kann dann in Bezug auf die Lotrichtung basierend auf der bestimmten relativen Höhe zwischen den zwei Referenzpunkten und dem fixen und definierten Abstand der beiden Referenzpunkte zueinander bestimmt werden.

Erfindungsgemäß weist der Neigungssensor einen ersten und einen zweiten Temperatursensor auf, wobei jeder der Temperatursensoren einem Drucksensor zugeordnet ist, der erste Temperatursensor dazu konfiguriert ist die Temperatur beim ersten Drucksensor, insbesondere in der Verbindungsflüssigkeit, zu messen, der zweite Temperatursensor dazu konfiguriert ist die Temperatur beim zweiten Drucksensor, insbesondere in der Verbindungsflüssigkeit, zu messen, und der Prozessor dazu konfiguriert ist die relative Höhe in Gravitationsrichtung und den Neigungswinkel auch basierend auf den gemessenen Temperaturen zu bestimmen, insbesondere basierend auf einer gemessenen Temperaturdifferenz. Dabei kann ein in der Verbindungsflüssigkeit vorhandener Temperaturgradient zwischen den beiden Drucksensoren bei der Bestimmung des Neigungswinkels mitberücksichtigt werden.

Gemäss einer vorteilhaften Ausführungsform des Neigungssensors können die Drucksensoren und/oder Temperatursensoren elektrisch miteinander verbunden sein. Der Neigungssensor kann dann einen Synchronisator aufweisen, wobei der Synchronisator dazu konfiguriert ist einen ersten Messzeitpunkt zu welchem der erste Druck- und/oder Temperatursensor misst mit einem zweiten Messzeitpunkt zu welchem der zweite Druck- und/oder Temperatursensor misst mittels eines elektrischen Triggersignals zu synchronisieren oder von den Drucksensoren und/oder Temperatursensoren asynchron gemessene hydrostatische Drücke und/oder Temperaturen zeitlich zu synchronisieren, wobei die gemessenen hydrostatischen Drücke und/oder Temperaturen basierend darauf einem gleichen gemeinsamen Messzeitpunkt zuordenbar sind.

Gemäss einer weiteren Ausführungsform des Neigungssensors kann ein erstes Drucksensorpaar mindestens einen weiteren ersten und einen weiteren zweiten Drucksensor aufweisen, wobei der Prozessor dazu konfiguriert ist die von den ersten Drucksensoren gemessenen hydrostatischen Drücke zu mitteln und die von den zweiten Drucksensoren gemessenen hydrostatischen Drücke zu mitteln und basierend darauf einen Neigungswinkel zu bestimmen.

Gemäss einer weiteren Ausführungsform des Neigungssensors kann der Flüssigkeitsbehälter ein Rohr oder Schlauch sein mit zwei sich gegenüberliegenden Enden, wobei der erste Drucksensor am einen Ende und der zweite Drucksensor am anderen dem einen Ende gegenüberliegenden Ende des Rohres oder Schlauches angeordnet ist.

Gemäss einer weiteren Ausführungsform kann der Neigungssensor ein Gehäuse aufweisen, welches das Rohr oder den Schlauch, die Sensoren und den Prozessor aufweist, wobei die Positionsrelation und der Abstand der Drucksensoren zueinander durch das Gehäuse fixiert und definiert ist.

In einer weiteren Ausführungsform des Neigungssensors kann der Flüssigkeitsbehälter ein Spiralschlauch sein mit zwei sich gegenüberliegenden Enden, wobei der erste Drucksensor am einen Ende und der zweite Drucksensor am anderen dem einen Ende gegenüberliegenden Ende des Spiralschlauchs angeordnet ist.

Gemäss einer Ausführungsform des Neigungssensors kann diese ein teleskopierbares Gehäuse aufweisen, welches den Spiralschlauch, die Sensoren und den Prozessor aufweist, wobei die Positionsrelation und somit der Abstand der Drucksensoren zueinander durch das teleskopierbare Gehäuse fixiert und definiert ist, das teleskopierbare Gehäuse hauptsächlich zwei Gehäuseteile aufweist, und jeder Gehäuseteil eines der beiden Enden des Spiralschlauchs und somit einen Drucksensor fixiert, und die zwei Gehäuseteile relativ zueinander entlang einer gemeinsamen Achse zu definierten Positionen verschiebbar sind.

Ein sich, mit der Position der Gehäuseteile relativ zueinander, ändernde Abstand zwischen den Drucksensoren kann beispielsweise über einen zusätzlichen Distanzmesser ermittelt und definiert werden. Ebenso könnte das teleskopierbare Gehäuse die möglichen einstellbaren Positionen der Gehäuseteile relativ zueinander rein konstruktiv auf vordefinierte Positionen beschränken, wobei den vordefinierten Positionen jeweils definierte Abstände zwischen den Drucksensoren zugeordnet sind.

Gemäss einer alternativen Ausführungsform kann der Neigungssensor weitere Drucksensorpaare aufweisen, wobei die Drucksensorpaare auf unter einem definierten Winkel zueinander angeordneten, insbesondere zueinander orthogonalen, Drucksensorpaarachsen angeordnet sind, und der Prozessor ferner dazu konfiguriert ist, paarweise eine relative Höhe in Gravitationsrichtung zwischen zwei Drucksensoren eines jeden Drucksensorpaars basierend auf den von den zwei Drucksensoren gemessenen hydrostatischen Drücken zu bestimmen, wobei die von den zwei Drucksensoren eines jeden Paares gemessenen hydrostatischen Drücke durch den Prozessor einem gleichen gemeinsamen Messzeitpunkt zuordenbar sind, und mindestens einen Neigungswinkel in Bezug auf die Lotrichtung basierend auf einer paarweise für ein Drucksensorpaar bestimmten relativen Höhe und dem fixen und definierten Abstand von den zwei Drucksensoren des Drucksensorpaars zueinander zu bestimmen.

Es ist zu beachten, dass der Neigungssensor auch eine ungerade Anzahl an Drucksensoren, aufweisen kann. Weist der Neigungssensor mehr als zwei Drucksensoren auf, dann kann derselbe Drucksensor ein Drucksensor unterschiedlicher Drucksensorpaare sein. Beispielsweise können drei Drucksensoren drei Drucksensorpaare bilden, wobei jeder Drucksensor zwei Drucksensorpaaren zugeordnet werden kann.

Gemäss einer weiteren alternativen Ausführungsform kann der Flüssigkeitsbehälter scheiben- oder plattenförmig ausgebildet sein und zwei zueinander mehrheitlich parallele Hauptflächen aufweisen, wobei die Drucksensoren eines Drucksensorpaars in Bezug auf einen Mittelpunkt des scheiben- oder plattenförmig ausgebildeten Flüssigkeitsbehälters einander gegenüberliegend, insbesondere diametral, an dessen Randbereich angeordnet sind.

Gemäss einer weiteren alternativen Ausführungsform kann der Flüssigkeitsbehälter des Neigungssensors torusförmig ausgebildet sein und eine Rotationsachse aufweisen, wobei die Drucksensoren eines Drucksensorpaars in Bezug auf die Rotationsachse einander gegenüberliegend, insbesondere diametral in Bezug auf einen Torusdurchmesser, im Bereich eines äusseren Umfangs des torusförmigen Flüssigkeitsbehälters angeordnet sind.

Gemäss einer weiteren alternativen Ausführungsform des Neigungssensors kann der Flüssigkeitsbehälter kugelförmig ausgebildet sein und einen Kugelmittelpunkt aufweisen, wobei die Drucksensoren eines Drucksensorpaars in Bezug auf den Kugelmittelpunkt einander gegenüberliegend, insbesondere diametral, an dessen Randbereich angeordnet sind.

Gemäss einer vorteilhaften alternativen Ausführungsform des Neigungssensors können die weiteren Drucksensorpaare einem zweiten und einem dritten Drucksensorpaar entsprechend mit einem dritten, vierten, fünften und sechsten Drucksensor, wobei der Flüssigkeitsbehälter würfelförmig ausgebildet ist, insbesondere sechs, Würfelflächen und einen Würfelmittelpunkt aufweist, und die Drucksensoren eines Drucksensorpaars in Bezug auf den Würfelmittelpunkt einander gegenüberliegend im Bereich der Würfelflächen angeordnet sind und jeder Drucksensor einer Würfelfläche zugeordnet ist.

Der würfelförmige Flüssigkeitsbehälter kann auch als Oktaeder, Dodekaeder, Ikosaeder usw. ausgestaltet sein mit einer zu der Anzahl an Würfelflächen korrespondierenden Anzahl an Drucksensorpaaren.

Gemäss einer weiteren vorteilhaften alternativen Ausführungsform des Neigungssensors kann der würfelförmige Flüssigkeitsbehälter einen mit der Verbindungsflüssigkeit gefüllten Verbindungskanal aufweisen, wobei der Verbindungskanal dazu ausgestaltet ist die Drucksensoren mindestens eines Drucksensorpaares über die Verbindungsflüssigkeit zu verbinden, insbesondere die Drucksensoren der drei Drucksensorpaare über die Verbindungsflüssigkeit miteinander zu verbinden, wobei der Verbindungskanal drei Verbindungs-Teilkanäle aufweist, und jedem Verbindungs-Teilkanal jeweils zwei Drucksensoren eines Drucksensorpaars zugeordnet sind und die Verbindungs-Teilkanäle dazu ausgestaltet sind die zwei Drucksensoren des jeweils zugeordneten Drucksensorpaars über die Verbindungsflüssigkeit zu verbinden, insbesondere wobei die drei Verbindungs-Teilkanäle orthogonal zueinander angeordnet sind.

Gemäss einer weiteren Ausführungsform des Neigungssensors kann dieser ein Druckausgleichsgefäss aufweisen, wobei das Druckausgleichsgefäss dazu konfiguriert ist einen Basisdruck im Flüssigkeitsbehälter einzustellen und konstant zu halten, und/oder einen Über- bzw. Unterdruck im Flüssigkeitsbehälter gegenüber einem äusseren Luftdruck auszugleichen und/oder zu begrenzen.

Gemäss einem nicht beanspruchten Aspekt des Neigungssensors kann dieser ein mit dem Prozessor verbundenes Display aufweisen, welches dazu konfiguriert ist Informationen betreffend mindestens eines aus gemessenen hydrostatischen Drücken, eine bestimmte relative Höhe, und einen bestimmten Neigungswinkel anzuzeigen.

### -KURZE BESCHREIBUNG DER FIGUREN-

Der erfindungsgemässe Neigungssensor wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: Komponenten eines erfindungsgemässen Neigungssensors zur Bestimmung einer Neigung in Bezug auf eine Lotrichtung;
- Fig. 2: mögliche Ausführungsformen des Neigungssensors mit einem ein- und zweiteiligen Gehäuse;
- Fig. 3: weitere mögliche Ausführungsformen des Neigungssensors mit mehreren Drucksensorpaaren; und
- Fig. 4: eine spezifische Ausführungsform des Neigungssensors mit einem würfelförmigen Flüssigkeitsbehälter und drei Drucksensorpaaren.

### -DETAILLIERTE BESCHREIBUNG DER ERFINDUNG-

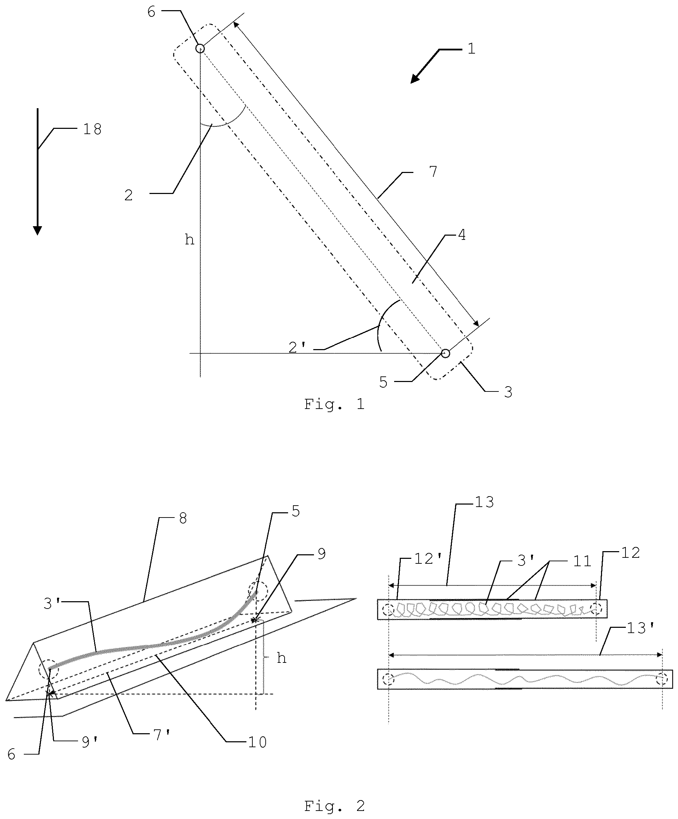

Der erfindungsgemässe Neigungssensor kann dazu verwendet werden die Neigung von Objekten, die in irgendeiner Weise mit dem Neigungssensor in Beziehung stehen, um eine oder mehrere Achsen in Bezug auf die vom Gravitationsfeld vorgegebene Lotrichtung, zu bestimmen. Vorteilhafterweise ist der Neigungssensor von einer kleinen Baugrösse, sodass er in beliebige Geräte beispielsweise Vermessungsgeräte oder Objekte, welche in Bezug auf die Lotrichtung ausgerichtet werden müssen oder eine Information über deren Ausrichtung benötigen integriert werden kann. Dabei beruht die Funktionsweise des Neigungssensors auf dem Prinzip der Bestimmung von relativen Höhen zwischen zwei voneinander in definiertem Masse beabstandeten Punkten mittels gemessener hydrostatischer Druckdifferenzen zwischen den Punkten. Basierend auf der bestimmten relativen Höhe und dem definierten Abstand zwischen den zwei Punkten kann ein dazugehöriger Neigungswinkel berechnet werden. Komponenten eines erfindungsgemässen Neigungssensors sind rein beispielhaft in Figur 1 gezeigt. Dabei weist der Neigungssensor 1 einen Flüssigkeitsbehälter 3 (rein beispielhaft skizziert) auf der mit einer Flüssigkeit bzw. Verbindungsflüssigkeit 4 gefüllt ist. Das Flüssigkeitsbehältermaterial weist dabei eine hohe chemische Beständigkeit auf und insbesondere eine gute Verträglichkeit mit der Verbindungsflüssigkeit mit welcher der Flüssigkeitsbehälter 3 gefüllt ist. Ebenso bildet das Flüssigkeitsbehältermaterial eine ausreichend effiziente Diffusionsbarriere für gasförmige Stoffe insbesondere Feuchtigkeit, Sauerstoff, CO2 und Stickstoff. Beispielsweise kann der Flüssigkeitsbehälter 3 aus einem Polymer hergestellt sein, welches eine für die Anwendung und unter Berücksichtigung der entsprechenden Flüssigkeitsbehältergeometrie ausreichend hohe Steifigkeit aufweist, sodass im Betrieb elastische Verformungen des Flüssigkeitsbehältermaterials ausreichend klein sind und somit die Einschwingzeit auf die relative Höhenmessung kurz ist. Gleiches gilt in analoger Weise für die Temperaturstabilität des Flüssigkeitsbehältermaterials. Der Flüssigkeitsbehälter ist vollständig mit der Verbindungsflüssigkeit gefüllt, sodass keine Lufteinschlüsse vorhanden sind. Die Wahl der Flüssigkeit ist dabei auf die Materialeigenschaften des Flüssigkeitsbehältermaterials abgestimmt und soll insbesondere einen Gefrierpunkt kleiner als -40° C haben. Dazu eignen sich beispielsweise diverse Öle wie Silikonöl, Transformatorenöl, Mineralöl, eine Ethylenglykol-Wasser Mischung, schwache Säuren, Alkohole aber auch andere organische Flüssigkeiten.

Wie beispielhaft in Figur 1 gezeigt sind ein erster 5 und ein zweiter Drucksensor 6 in Bezug auf den Flüssigkeitsbehältermittelpunkt einander gegenüberliegend im Randbereich des Behälters so angeordnet, dass diese über die Verbindungsflüssigkeit miteinander verbunden sind. Der erste Drucksensor 5 und der zweite Drucksensor 6 kann auch aus mehreren einzelnen Drucksensoren bestehen um die Messwerte zu mitteln und damit das Rauschen zu reduzieren. Dabei haben die Drucksensoren eine fixe und definierte Positionsrelation und somit einen fixen und definierten Abstand 7 zueinander. Die Drucksensoren sind dazu ausgelegt einen hydrostatischen Druck in der Verbindungsflüssigkeit zu messen. Die Drucksensoren können auch Teil eines Drucksensormoduls sein, welches in der Flüssigkeitsbehälterwand integriert ist. Diese Anordnung der Sensoren ermöglicht eine, insbesondere gleichzeitige, Messung des hydrostatischen Drucks an den beiden sich gegenüberliegenden Randbereichen des Flüssigkeitsbehälters in derselben Flüssigkeit.

Der erfindungsgemässe Neigungssensor weist auch einen Prozessor (hier nicht gezeigt) auf der dazu konfiguriert ist basierend auf den von den Drucksensoren gemessenen hydrostatischen Drücken eine relative Höhe h zwischen den beiden Drucksensoren zu bestimmen. Ferner ist der Prozessor dazu konfiguriert diese so bestimmte relative Höhe h zusammen mit dem definierten Abstand 7 mittels einfacher trigonometrischer Beziehungen in einen Neigungswinkel 2 und/oder auch 2' umzurechnen. Der Prozessor ist Teil einer Hardware, die die nötigen elektronischen und mikroelektronischen Komponenten, Speichermedien und Schnittstellen aufweist um Daten und/oder Signale zu verarbeiten, zu speichern, zu senden und zu empfangen. Dabei kann der Prozessor auch mehrere, insbesondere funktional verknüpfte, einzelne Prozessoren aufweisen. All diese Komponenten sind beispielsweise auf einer oder mehreren miteinander verbunden Platinen/Elektronikboards aufgebracht.

Um einen genauen Messwert für die relative Höhe h zu erhalten ist es entscheidend, dass die Messwerte der beiden Drucksensoren jeweils gleichzeitig gemessen werden um basierend darauf die relative Höhe h zu bestimmen.

In einer vorteilhaften Ausführungsform des Neigungssensors 1, weist dieser Temperatursensoren auf, wobei jedem Drucksensor ein Temperatursensor zugeordnet ist. Die Temperatursensoren dienen zur Messung der Temperatur, insbesondere in der Flüssigkeit, bei dem jeweiligen Drucksensor. Da die relative Höhe basierend auf der Differenz der gemessenen hydrostatischen Drücke bestimmt wird und der hydrostatische Druck von der Dichte der Flüssigkeit deren hydrostatischer Druck gemessen wird abhängt wird sich eine Änderung der Dichte der Flüssigkeit auf die ermittelte relative Höhe auswirken. Eine solche Dichteänderung kann beispielsweise aufgrund einer Änderung der Temperatur der Flüssigkeit erfolgen. Durch das Messen der Temperatur bei den Drucksensoren, wo jeweils der hydrostatische Druck gemessen wird ist es möglich Temperatureinflüsse auf die Dichte der Flüssigkeit bei der Bestimmung der relativen Höhe h zu berücksichtigen beispielsweise durch Verwenden von tabellarisch hinterlegten Dichtewerten der Flüssigkeit bei unterschiedlichen Temperaturen, gespeichert in Form einer "Look-up Table". Mittels dieser "Look-up Table" kann die Temperaturabhängigkeit der Dichte der Verbindungsflüssigkeit und damit die Höhenmessung korrigiert werden. Eine die Messung der Drucksensoren beeinflussende Temperaturabhängigkeit der Drucksensoren selber kann beispielsweise mittels in den Drucksensoren integrierten Temperatursensoren bestimmt und die Druckmessung so automatisch korrigiert werden.

Gemäss einer weiteren vorteilhaften Ausführungsform kann der Neigungssensor 1 einen Synchronisator und elektrisch miteinander verbundene Druck- und/oder Temperatursensoren aufweisen. Dieser Synchronisator dient dem Zwecke, dass gemessene hydrostatische Drücke und/oder Temperaturen einem gleichen gemeinsamen Messzeitpunkt zuordenbar sind. Äussere Einflüsse wie Quetschung oder Stossen des Flüssigkeitsbehälters können durch eine synchrone Druckmessung an den sich gegenüberliegenden Randbereichen massgeblich reduziert werden. Eine weitere Massnahme, um äussere Einflüsse auf die Bestimmung der relativen Höhe zu reduzieren, ist das verteilte Platzieren von mechanischen Dämpfungsfiltern in der Flüssigkeit, wobei die Dämpfungsfilter im Flüssigkeitsbehälter und/oder nahe bei den Drucksensoren angebracht werden. Filterwirkung haben Lamellen, Membranen, oder schwammartige Schaumstoffe. Diese Hilfsmittel reduzieren die Schwankungen der hydrostatischen Druckamplituden der Flüssigkeit. Die Druck- und/oder Temperatursensoren können unterschiedlich ausgebildet sein. Weisen diese einen dafür konzipierten Triggersignaleingang auf, dann kann der Synchronisator ein Triggersignal erzeugen/verwenden, um die Messzeitpunkte zu welchen die Sensoren messen zeitlich zu synchronisieren. Das Triggersignal kann beispielsweise ein elektrisches Triggersignal oder auch ein wireless-Triggersignal sein, wobei bei einem wireless-Triggersignal die Sensoren an den sich gegenüberliegenden Randbereichen des Flüssigkeitsbehälters jeweils mit einem wireless-Triggersignal-Empfänger verbunden sind, der dazu konfiguriert ist basierend auf einem empfangenen wireless-Triggersignal Sensormessungen auszulösen. Die Druck- und/oder Temperatursensoren können auch so ausgebildet sein, dass diese asynchron, jeweils eigenständig mit einer bestimmten wählbaren Frequenz fortlaufend Messwerte erzeugen. Dann kann der Synchronisator dazu konfiguriert sein, diese asynchron erzeugten Messwerte zeitlich zu synchronisieren. Beispielsweise können so Messwerte mit einem zeitlichen Versatz der einen bestimmten Maximalwert nicht überschreitet einen gemeinsamen Zeitstempel erhalten. Die Druck- und/oder Temperatursensoren können auch so ausgebildet sein, dass diese fortlaufend Messwerte erzeugen und bei Erzeugung eines Messwerts dies mit einem Hinweissignal signalisieren. In diesem Fall kann der Synchronisator dazu konfiguriert sein basierend auf den Hinweissignalen der Sensoren den Messwerten einen gemeinsamen Zeitstempel zuzuweisen.

Wie bereits beschrieben erfolgt die Bestimmung der relativen Höhe durch den Prozessor basierend auf einer gemessenen hydrostatischen Druckdifferenz zwischen den Randbereichen an denen die hydrostatischen Drücke gemessen werden. Dabei kann der Prozessor beispielsweise durch Auslesen einer abgespeicherten Korrelationstabelle, welche hydrostatische Druckdifferenzen bestimmten relativen Höhen zuordnet, die relative Höhe zwischen zwei Drucksensoren bestimmen. Dabei basiert die Korrelationstabelle auf einer Kalibrationsrelation. Ebenso wäre es denkbar, dass die gemessene Druckdifferenz mittels einer Kalibrationsrelation einer relativen Höhe zugeordnet wird. Die Kalibrationsrelation schafft einen Neigungssensorspezifischen und lagespezifischen Zusammenhang zwischen gemessenen Druckdifferenzen und relativen Höhen. Die Kalibrationsrelation kann beispielsweise eine mathematische Funktion sein, welche die relative Höhe als Funktion der gemessenen Druckdifferenz berechnet.

Der Prozessor kann vorteilhafterweise eine Kalibrationsfunktionalität aufweisen. Dabei ermöglicht die Kalibrationsfunktionalität jederzeit eine einfache (Re)kalibrierung des Neigungssensors. Bei der (Re)kalibrierung wird die Kalibrationsrelation bestimmt. Die Bestimmung der Kalibrationsrelation basiert dabei auf der Positionierung zweier sich gegenüberliegender Drucksensoren bzw. auf der Positionierung der Randbereiche des Flüssigkeitsbehälters in definiertem Abstand in Gravitationsrichtung zueinander. Diese definierte relative Höhe kann der gemessenen Druckdifferenz zugeordnet werden. Basierend auf mindestens einer solchen Zuordnung von Druckdifferenz zu definierter relativer Höhe kann dann die Kalibrationsrelation durch den Prozessor ermittelt werden.

Wie in Figur 2 gezeigt kann der Flüssigkeitsbehälter beispielsweise ein formstabiles Rohr sein oder auch ein Schlauch 3'. Vorteilhafterweise kann dann der Neigungssensor ein Gehäuse 8 aufweisen, welches das Rohr bzw. den Schlauch und die Sensorik unterbringt und dadurch gleichzeitig die Positionsrelation der Drucksensoren 5, 6 und deren Abstand zueinander definiert und fixiert. Dabei kann das Gehäuse vorteilhafterweise so ausgestaltet sein, dass es Referenzpunkte 9, 9', welche eine fixe und definierte Positionsrelation zu dem jeweiligen Drucksensor aufweisen, beispielsweise in Form einer Referenzkante oder -fläche aufweist, wobei der Neigungswinkel in Bezug auf die Lotrichtung basierend auf der bestimmten relativen Höhe h zwischen den zwei Referenzpunkten bzw. Drucksensoren und dem fixen und definierten Abstand 10 der beiden Referenzpunkte bzw. Drucksensoren zueinander bestimmt werden kann.

Wie in Figur 2 schematisch gezeigt kann der Schlauch in einer spezifischen Ausführungsform beispielsweise ein Spiralschlauch 3" sein. Der Spiralschlauch hat zwei einander gegenüberliegende Enden, wobei an den Enden des Spiralschlauchs entsprechende Drucksensoren angebracht sind. Ein Vorteil des Spiralschlauches ist, dass er "ausziehbar" ist. Somit kann das Gehäuse beispielsweise ein "teleskopierbares" bzw. ausziehbares Gehäuse 11 sein, welches im Wesentlichen aus zwei Gehäuseteilen 12, 12' besteht. Jeder Gehäuseteil weist dann ein Ende des Spiralschlauchs auf und fixiert dieses Ende und somit auch die Druck- bzw. Temperatursensoren. Die zwei Gehäuseteile des teleskopierbaren Gehäuses lassen sich entlang einer gemeinsamen Achse zu definierten Positionen relativ zueinander verschieben. Eine definierte Position betrifft dabei einen "ausgezogenen" Zustand des teleskopierbaren Gehäuses mit Positionen der Gehäuseteile relativ zueinander, welche insofern definiert sind als dass ein Abstand 13, 13' zwischen den Enden des Spiralschlauchs und somit auch zwischen den Drucksensoren definiert ist. Dieser sich, mit der Position der Gehäuseteile relativ zueinander, ändernde Abstand kann beispielsweise über einen zusätzlichen Distanzmesser ermittelt und definiert werden. Ebenso könnte das teleskopierbare Gehäuse die möglichen einstellbaren Positionen der Gehäuseteile relativ zueinander rein konstruktiv auf vordefinierte Positionen beschränken, wobei den vordefinierten Positionen jeweils definierte Abstände zwischen den Drucksensoren zugeordnet sind.

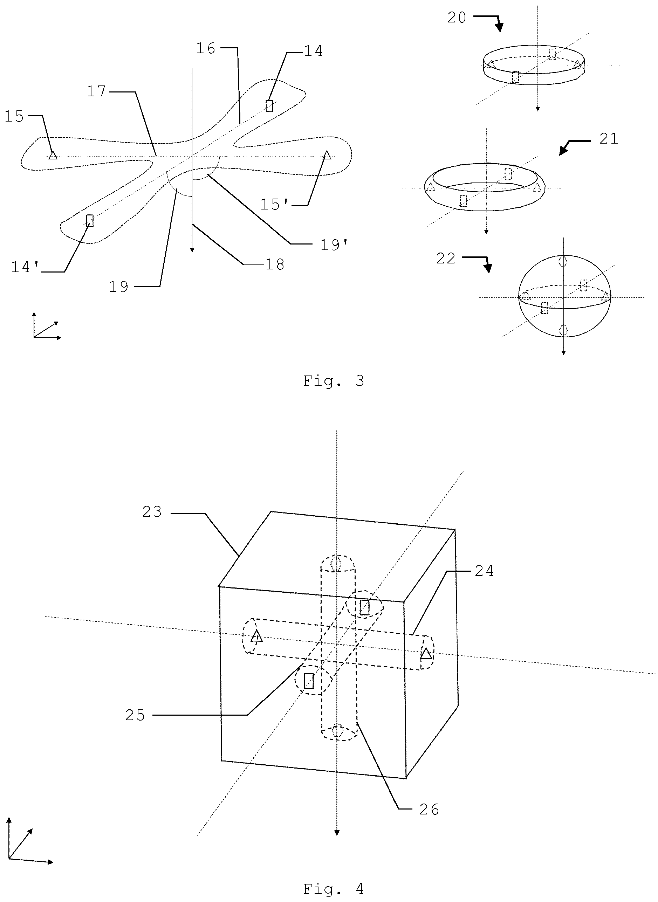

Der Neigungssensor kann je nach Ausführungsform eine beliebige Anzahl von Drucksensorpaaren aufweisen wie rein beispielhaft in Figur 3 gezeigt. Dabei liegt ein Drucksensorpaar 14, 14' bzw. 15, 15' typischerweise auf einer Drucksensorpaarachse 16 bzw. 17, wobei die beiden Drucksensoren auf der Drucksensorpaarachse in Bezug auf einen Flüssigkeitsbehältermittelpunkt einander gegenüberliegend angeordnet sind. Die Drucksensorpaarachsen sind vorteilhafterweise orthogonal zueinander angeordnet, wobei ein Neigungswinkel bzw. eine Neigung in Bezug auf die Lotrichtung 18 entsprechend der Anzahl an Drucksensorpaaren und Drucksensorpaarachsen in mehreren Dimensionen 19, 19' bestimmt werden kann. Der Flüssigkeitsbehälter kann wie in Figur 3 beispielhaft gezeigt scheiben oder plattenförmig ausgebildet sein 20. Der Flüssigkeitsbehälter weist dabei zwei zueinander mehrheitlich parallele Hauptflächen auf. Die Drucksensoren der Drucksensorpaare sind dabei diametral am Randbereich des Flüssigkeitsbehälters angeordnet. In analoger Weise kann der Flüssigkeitsbehälter torusförmig ausgebildet sein 21. Ebenso - in analoger Weise - könnte der Flüssigkeitsbehälter kugelförmig 22 sein und beispielsweise drei Drucksensorpaare aufweisen.

In Figur 4 ist eine weitere mögliche Ausführungsform des Neigungssensors gezeigt. Dabei weist der Neigungssensor einen würfelförmigen Flüssigkeitsbehälter 23 mit sechs Würfelflächen und sechs Drucksensoren, die drei Drucksensorpaare bilden, auf. Jeder Drucksensor ist einer Würfelfläche zu- und im Bereich der jeweiligen Würfelfläche angeordnet. Die Drucksensorpaare befinden sich jeweils auf einer Drucksensorpaarachse, wobei die drei Drucksensorpaarachsen orthogonal zueinander angeordnet sind. In einer vorteilhaften Ausführungsform, weist der würfelförmige Flüssigkeitsbehälter einen Verbindungskanal zu allen Drucksensoren auf. Der Verbindungskanal verbindet alle Drucksensoren miteinander. Es kann besonders vorteilhaft sein alle Sensoren mit einem Verbindungskanal und somit mit derselben Verbindungsflüssigkeit zu verbinden, da dadurch alle Sensoren durch die gleichen "Flüssigkeitseffekte" beeinflusst werden, wie zum Beispiel eine Dichteänderung wegen einer Temperaturveränderung.

Unabhängig von der Ausführungsform des Flüssigkeitsbehälters kann dieser eine Einfüllvorrichtung aufweisen zur Befüllung des Flüssigkeitsbehälters mit Verbindungsflüssigkeit. Ebenso kann der Flüssigkeitsbehälter eine Druckausgleichsvorrichtung, beispielsweise basierend auf einer flexiblen Membran aufweisen um den Druck der Verbindungsflüssigkeit im Flüssigkeitsbehälter äusseren Umständen anzupassen. Diese Druckausgleichsvorrichtung regelt die Einstellung und die Aufrechterhaltung eines Basisdrucks der Verbindungsflüssigkeit im Flüssigkeitbehälter. Die Einstellung dieses Basisdrucks erfüllt eine wichtige Aufgabe bei beispielsweise der Kalibration oder Re-kalibration des Neigungssensor und ermöglicht eine Anpassung der auftretenden hydrostatischen Drücke an den sensitiven Bereich der beiden Drucksensoren. Des Weiteren ermöglicht das Druckausgleichsgefäss eine Begrenzung eines Über- bzw. Unterdrucks im Flüssigkeitsbehälter gegenüber einem äusseren atmosphärischen Luftdruck. Dadurch kann der Neigungssensor vor möglichen Beschädigungen beispielsweise der Sensoren, des Flüssigkeitsbehälters usw. geschützt werden. Zudem ist dadurch ein Eindringen von Luft wegen potentiellen Undichtigkeitsstellen des hydrostatischen Systems unwahrscheinlich, da der hydrostatische Innendruck laufend dem Aussendruck angeglichen wird. Der Flüssigkeitsbehälter kann auch ein Entlüftungsventil aufweisen. Dieses Entlüftungsventil ermöglicht die Beseitigung von Lufteinschlüssen im Flüssigkeitsbehälter. Dadurch kann die Messgenauigkeit aufrechterhalten werden und im Falle, dass Luft in den Flüssigkeitsbehälter eindringen sollte diese im Rahmen einer Neukalibration wieder entfernt werden.

Gemäss einer weiteren Ausführungsform kann der Neigungssensor auch ein Display aufweisen, wobei das Display so mit dem Prozessor verbunden ist, dass unterschiedliche Informationen betreffend die hydrostatischen Drücke, die bestimmte relative Höhe und/oder einen bestimmten Neigungswinkel/eine bestimmte Neigung über das Display angezeigt werden.

Es versteht sich, dass diese dargestellten Figuren nur mögliche Ausführungsbeispiele schematisch darstellen. Die verschiedenen Ansätze können erfindungsgemäss ebenso miteinander sowie mit Messkonzepten oder Messgeräten des Stands der Technik kombiniert werden.

## Patentansprüche

1. Neigungssensor (1) zur Bestimmung eines Neigungswinkels (2, 2') in Bezug auf die vom Gravitationsfeld vorgegebene Lotrichtung (18), umfassend
• einen Flüssigkeitsbehälter (3), gefüllt mit einer gegen eine äussere Atmosphäre vom Flüssigkeitsbehälter gasdicht abgeschlossenen Flüssigkeit als Verbindungsflüssigkeit (4),
• ein erstes Drucksensorpaar aufweisend einen ersten (5) und einen zweiten Drucksensor (6),
o wobei der erste und der zweite Drucksensor in einem Randbereich des Flüssigkeitsbehälters (3) so angeordnet sind, dass
• sie über die Verbindungsflüssigkeit (4) miteinander verbunden sind, und
• eine fixe und definierte Positionsrelation und somit einen fixen und definierten Abstand (7) zueinander aufweisen, und
o wobei der erste (5) und der zweite Drucksensor (6) dazu konfiguriert sind jeweils einen hydrostatischen Druck in der Verbindungsflüssigkeit (4) zu messen,
• einen ersten und einen zweiten Temperatursensor, wobei
o jeder der Temperatursensoren einem Drucksensor zugeordnet ist,
o der erste Temperatursensor dazu konfiguriert ist die Temperatur beim ersten Drucksensor, insbesondere in der Verbindungsflüssigkeit, zu messen, und
o der zweite Temperatursensor dazu konfiguriert ist die Temperatur beim zweiten Drucksensor, insbesondere in der Verbindungsflüssigkeit, zu messen, und
• einen Prozessor, welcher dazu konfiguriert ist,
o eine relative Höhe (h) in Gravitationsrichtung (18) zwischen dem ersten (5) und dem zweiten Drucksensor (6) basierend auf den vom ersten und vom zweiten Drucksensor gemessenen hydrostatischen Drücken zu bestimmen, wobei die gemessenen hydrostatischen Drücke durch den Prozessor einem gleichen gemeinsamen Messzeitpunkt zuordenbar sind,
o einen Neigungswinkel (2, 2') in Bezug auf die Lotrichtung (18) basierend auf der bestimmten relativen Höhe (h) und dem fixen und definierten Abstand (7) der Drucksensoren zueinander zu bestimmen, und
o die relative Höhe in Gravitationsrichtung und den Neigungswinkel auch basierend auf den gemessenen Temperaturen zu bestimmen, insbesondere basierend auf einer gemessenen Temperaturdifferenz.

2. Neigungssensor nach Anspruch 1, wobei ein in der Verbindungsflüssigkeit vorhandener Temperaturgradient zwischen den beiden Drucksensoren bei der Bestimmung des Neigungswinkels mitberücksichtigt wird.

3. Neigungssensor nach einem der Ansprüche 1 bis 2, ferner umfassend einen Synchronisator und dadurch, dass die Drucksensoren und/oder Temperatursensoren elektrisch miteinander verbunden sind, wobei der Synchronisator dazu konfiguriert ist
o einen ersten Messzeitpunkt zu welchem der erste Druck- und/oder Temperatursensor misst mit einem zweiten Messzeitpunkt zu welchem der zweite Druck- und/oder Temperatursensor misst mittels eines elektrischen Triggersignals zu synchronisieren, oder
o von den Drucksensoren und/oder Temperatursensoren asynchron gemessene hydrostatische Drücke und/oder Temperaturen zeitlich zu synchronisieren,
wobei die gemessenen hydrostatischen Drücke und/oder Temperaturen basierend darauf einem gleichen gemeinsamen Messzeitpunkt zuordenbar sind.

4. Neigungssensor nach einem der Ansprüche 1 bis 3, wobei
o ein erstes Drucksensorpaar mindestens einen weiteren ersten und einen weiteren zweiten Drucksensor aufweist, und
o der Prozessor dazu konfiguriert ist die von den ersten Drucksensoren gemessenen hydrostatischen Drücke zu mitteln und die von den zweiten Drucksensoren gemessenen hydrostatischen Drücke zu mitteln und basierend darauf einen Neigungswinkel zu bestimmen.

5. Neigungssensor nach einem der Ansprüche 1 bis 4, wobei der Flüssigkeitsbehälter ein Rohr oder Schlauch (3') ist mit zwei sich gegenüberliegenden Enden und der erste Drucksensor (5) am einen Ende und der zweite Drucksensor (6) am anderen dem einen Ende gegenüberliegenden Ende des Rohres oder Schlauches angeordnet ist.

6. Neigungssensor nach Anspruch 5, ferner umfassend ein Gehäuse (8), aufweisend das Rohr oder den Schlauch (3'), die Sensoren und den Prozessor, wobei die Positionsrelation und der Abstand der Drucksensoren zueinander durch das Gehäuse fixiert und definiert ist.

7. Neigungssensor nach einem der Ansprüche 5 bis 6, wobei der Schlauch ein Spiralschlauch ist mit zwei sich gegenüberliegenden Enden und der erste Drucksensor am einen Ende und der zweite Drucksensor am anderen dem einen Ende gegenüberliegenden Ende des Spiralschlauchs angeordnet ist.

8. Neigungssensor nach Anspruch 7, ferner umfassend ein teleskopierbares Gehäuse (11), aufweisend den Spiralschlauch, die Sensoren und den Prozessor, wobei
o die Positionsrelation und der Abstand (13, 13') der Drucksensoren zueinander durch das teleskopierbare Gehäuse (11) fixiert und definiert ist,
o das teleskopierbare Gehäuse hauptsächlich zwei Gehäuseteile (12, 12') aufweist, und jeder Gehäuseteil eines der beiden Enden des Spiralschlauchs und einen Drucksensor fixiert, und
o die zwei Gehäuseteile relativ zueinander entlang einer gemeinsamen Achse zu definierten Positionen verschiebbar sind.

9. Neigungssensor nach einem der Ansprüche 1 bis 4, ferner umfassend weitere Drucksensorpaare, (14, 14', 15, 15', wobei die Drucksensorpaare auf unter einem definierten Winkel zueinander angeordneten, insbesondere zueinander orthogonalen, Drucksensorpaarachsen (16, 17) angeordnet sind, und
o der Prozessor ferner dazu konfiguriert ist,
i. paarweise eine relative Höhe in Gravitationsrichtung zwischen zwei Drucksensoren eines jeden Drucksensorpaars basierend auf den von den zwei Drucksensoren gemessenen hydrostatischen Drücken zu bestimmen, wobei die von den zwei Drucksensoren eines jeden Paares gemessenen hydrostatischen Drücke durch den Prozessor einem gleichen gemeinsamen Messzeitpunkt zuordenbar sind, und
ii. mindestens einen Neigungswinkel (19, 19') in Bezug auf die Lotrichtung basierend auf einer paarweise für ein Drucksensorpaar bestimmten relativen Höhe und dem fixen und definierten Abstand von den zwei Drucksensoren des Drucksensorpaars zueinander zu bestimmen.

10. Neigungssensor nach Anspruch 9, wobei
oder Flüssigkeitsbehälter scheiben- oder plattenförmig (20) ausgebildet ist und zwei zueinander mehrheitlich parallele Hauptflächen aufweist, und
o die Drucksensoren eines Drucksensorpaars in Bezug auf einen Mittelpunkt des scheiben- oder plattenförmig ausgebildeten Flüssigkeitsbehälters einander gegenüberliegend an dessen Randbereich angeordnet sind.

11. Neigungssensor nach Anspruch 9, wobei
oder Flüssigkeitsbehälter torusförmig (21) ausgebildet ist und eine Rotationsachse aufweist, und
o die Drucksensoren eines Drucksensorpaars in Bezug auf die Rotationsachse einander gegenüberliegend im Bereich eines äusseren Umfangs des torusförmigen Flüssigkeitsbehälters angeordnet sind.

12. Neigungssensor nach Anspruch 9, wobei
oder Flüssigkeitsbehälter kugelförmig (22) ausgebildet ist und einen Kugelmittelpunkt aufweist, und
o die Drucksensoren eines Drucksensorpaars in Bezug auf den Kugelmittelpunkt einander gegenüberliegend an dessen Randbereich angeordnet sind.

13. Neigungssensor nach Anspruch 9, wobei
o die weiteren Drucksensorpaare, einem zweiten und einem dritten Drucksensorpaar entsprechen mit einem dritten, vierten, fünften und sechsten Drucksensor,
oder Flüssigkeitsbehälter würfelförmig (23) ausgebildet ist, insbesondere sechs, Würfelflächen und einen Würfelmittelpunkt aufweist, und
o die Drucksensoren eines Drucksensorpaars in Bezug auf den Würfelmittelpunkt einander gegenüberliegend im Bereich der Würfelflächen angeordnet sind und jeder Drucksensor einer Würfelfläche zugeordnet ist.

14. Neigungssensor nach Anspruch 13, wobei der würfelförmige Flüssigkeitsbehälter einen mit der Verbindungsflüssigkeit gefüllten Verbindungskanal aufweist, der dazu ausgestaltet ist die Drucksensoren mindestens eines Drucksensorpaares über die Verbindungsflüssigkeit zu verbinden, insbesondere die Drucksensoren der drei Drucksensorpaare über die Verbindungsflüssigkeit miteinander zu verbinden, wobei der Verbindungskanal drei Verbindungs-Teilkanäle (24, 25, 26) aufweist, und jedem Verbindungs-Teilkanal jeweils zwei Drucksensoren eines Drucksensorpaars zugeordnet sind und die Verbindungs-Teilkanäle dazu ausgestaltet sind die zwei Drucksensoren des jeweils zugeordneten Drucksensorpaars über die Verbindungsflüssigkeit zu verbinden, insbesondere wobei die drei Verbindungs-Teilkanäle orthogonal zueinander angeordnet sind.

15. Neigungssensor nach einem der Ansprüche 1 bis 14, ferner umfassend ein Druckausgleichsgefäss, wobei das Druckausgleichsgefäss dazu konfiguriert ist
o einen Basisdruck im Flüssigkeitsbehälter einzustellen und konstant zu halten, und/oder
o einen Über- bzw. Unterdruck im Flüssigkeitsbehälter gegenüber einem äusseren Luftdruck auszugleichen und/oder zu begrenzen.

## Claims

1. Inclination sensor (1) for determining an angle of inclination (2, 2') relative to the vertical direction (18) defined by the gravitational field, comprising
• a fluid container (3), filled with a fluid which is sealed in a gastight manner against an external atmosphere by said fluid container as a connecting fluid (4),
• a first pressure sensor pair having a first (5) and a second pressure sensor (6),
o wherein the first and second pressure sensors are arranged in an edge region of the fluid container (3) such that
• they are connected to each other by the connecting fluid (4), and
• have a fixed and defined positional relation to each other and are thus a fixed and defined distance (7) apart, and
o wherein the first (5) and the second pressure sensor (6) are each configured to measure a hydrostatic pressure in the connecting fluid (4), and
• a first and a second temperature sensor, wherein
o each of the temperature sensors is assigned to a pressure sensor,
o the first temperature sensor is configured to measure the temperature at the first pressure sensor, in particular in the connecting fluid, and
o the second temperature sensor is configured to measure the temperature at the second pressure sensor, in particular in the connecting fluid, and
• a processor which is configured
o to determine a relative height (h) in the direction of gravity (18) between the first (5) and the second pressure sensor (6) based on the hydrostatic pressures measured by the first and second pressure sensor, wherein the measured hydrostatic pressures can be assigned by the processor to an identical common measurement time, and
o to determine an angle of inclination (2, 2') with respect to the vertical direction (18) based on the determined relative height (h) and the fixed and defined distance (7) apart of the pressure sensors, and
o to determine the relative height in the direction of gravity and the angle of inclination also based on the measured temperatures, in particular based on a measured temperature difference.

2. Inclination sensor according to Claim 1, **characterized by** a first and a second temperature sensor, wherein a temperature gradient between the two pressure sensors that is present in the connecting fluid is taken into account in determining the angle of inclination.

3. Inclination sensor according to any one of Claims 1 to 2, further comprising a synchroniser and in that the pressure sensors and/or temperature sensors are electrically connected to each other, wherein the synchroniser is configured
o to synchronize a first measurement time, at which the first pressure and/or temperature sensor measures, with a second measurement time, at which the second pressure and/or temperature sensor measures, by means of an electrical trigger signal, or
o to synchronize hydrostatic pressures and/or temperatures measured asynchronously by the pressure sensors and/or temperature sensors over time,
wherein the measured hydrostatic pressures and/or temperatures can be assigned to an identical common measurement time based on the result.

4. Inclination sensor according to any one of Claims 1 to 3, wherein
o a first pressure sensor pair has at least one additional first and one additional second pressure sensor, and
o the processor is configured to average the hydrostatic pressures measured by the first pressure sensors and to average the hydrostatic pressures measured by the second pressure sensors and to determine an angle of inclination based on the results.

5. Inclination sensor according to any one of Claims 1 to 4, wherein the fluid container is a tube or hose (3') with two opposite ends and the first pressure sensor (5) is arranged at one end and the second pressure sensor (6) at the other end of the tube or hose opposite the first end.

6. Inclination sensor according to Claim 5, further comprising a housing (8), having the tube or hose (3'), the sensors and the processor, wherein the positional relation and the distance apart of the pressure sensors is fixed and defined by the housing.

7. Inclination sensor according to any one of Claims 5 to 6, wherein the hose is a spiral hose with two opposite ends and the first pressure sensor is arranged at one end and the second pressure sensor at the other end of the spiral hose opposite the first end.

8. Inclination sensor according to Claim 7, further comprising a telescopic housing (11), having the spiral hose, the sensors and the processor, wherein
o the positional relation and the distance (13, 13') of the pressure sensors apart is fixed and defined by the telescopic housing (11),
o the telescopic housing has mainly two housing parts (12, 12'), and each housing part fixes one of the two ends of the spiral hose and one pressure sensor, and
o the two housing parts can be moved relative to each other along a common axis to defined positions.

9. Inclination sensor according to any one of Claims 1 to 4, further comprising further pressure sensor pairs (14, 14', 15, 15'),wherein the pressure sensor pairs are arranged on pressure sensor pair axes (16, 17) arranged at a defined angle relative to each other, in particular orthogonal to each other, and
o the processor is also configured
i. to determine in pairs a relative height in the direction of gravity between two pressure sensors of each pressure sensor pair based on the hydrostatic pressures measured by the two pressure sensors, wherein the hydrostatic pressures measured by the two pressure sensors of each pair can be assigned by the processor to an identical common measurement time, and
ii. to determine at least one angle of inclination (19, 19') in relation to the vertical direction based on a relative height determined in pairs for a pressure sensor pair and the fixed and defined distance between the two pressure sensors of the pressure sensor pair.

10. Inclination sensor according to Claim 9, wherein
o the fluid container is shaped like a disk or plate (20) and has two main surfaces substantially parallel to each other, and
o the pressure sensors of a pressure sensor pair are arranged opposite each other with respect to a centre of the fluid container designed in the shape of a disk or plate, in the edge region of said container.

11. Inclination sensor according to Claim 9, wherein
o the fluid container is toroidal (21) in shape and has a rotational axis, and
o the pressure sensors of a pressure sensor pair are arranged opposite each other in relation to the rotational axis in the region of an outer circumference of the toroidal fluid container.

12. Inclination sensor according to Claim 9, wherein
o the fluid container is spherical (22) and has a sphere centre, and
o the pressure sensors of a pressure sensor pair are arranged opposite each other in the edge region of the sphere with respect to the centre of the latter.

13. Inclination sensor according to Claim 9, wherein
o the additional pressure sensor pairs correspond to a second and a third pressure sensor pair with a third, fourth, fifth and sixth pressure sensor,
o the fluid container is cube-shaped (23), in particular having six cube surfaces and a cube centre, and
o the pressure sensors of a pressure sensor pair are arranged opposite each other in relation to the cube centre in the region of the cube faces, and each pressure sensor is assigned to one cube surface.

14. Inclination sensor according to Claim 13, wherein the cube-shaped fluid container has a connecting channel, which is filled with the connecting fluid and is designed to connect the pressure sensors of at least one pressure sensor pair via the connecting fluid, in particular to connect the pressure sensors of the three pressure sensor pairs to each other via the connecting fluid, wherein the connecting channel has three connecting sub-channels (24, 25, 26), and two pressure sensors of a pressure sensor pair are assigned to each connecting sub-channel and the connecting sub-channels are designed to connect the two pressure sensors of the respectively assigned pressure sensor pair via the connecting fluid, in particular wherein the three connecting sub-channels are arranged orthogonally to each other.

15. Inclination sensor according to any one of Claims 1 to 14, further comprising a pressure equalization vessel, wherein the pressure equalization vessel is configured
o to set and maintain constant a base pressure in the fluid container, and/or
o to equalize and/or limit an excess or negative pressure in the fluid container in relation to an external air pressure.

## Revendications

1. Capteur d'inclinaison (1) pour la détermination d'un angle d'inclinaison (2, 2') par rapport à la verticale (18) prédéfinie par le champ de gravité comprenant :
• un récipient de liquide (3) rempli avec un liquide enfermé étanche au gaz contre une atmosphère extérieure du récipient de liquide comme liquide de liaison (4),
• une première paire de capteurs de pression qui présente un premier (5) et un second capteur de pression (6),
o le premier et le second capteur de pression étant placés dans une zone marginale du récipient de liquide (3) de telle manière
▪ qu'ils sont reliés l'un à l'autre par le liquide de liaison (4) et
▪ présentent une relation de position fixe et définie et donc une distance fixe et définie l'un par rapport à l'autre et
o cependant que le premier (5) et le second capteur de pression (6) sont configurés pour mesurer chacun une pression hydrostatique dans le liquide de liaison (4),
• un premier et un second capteur de température, cependant que
o chacun des capteurs de température est associé à un capteur de pression,
o le premier capteur de température est configuré pour mesurer la température près du premier capteur de pression, en particulier dans le liquide de liaison, et
o le second capteur de température est configuré pour mesurer la température près du second capteur de pression, en particulier dans le liquide de liaison, et
• un processeur qui est configuré
o pour déterminer une hauteur relative (h) dans le sens de la gravité (18) entre le premier (5) et le second capteur de pression (6) sur la base des pressions hydrostatiques mesurées par le premier et le second capteur de pression, les pressions hydrostatiques mesurées pouvant être associées par le processeur à un même instant de mesure commun,
o pour déterminer un angle d'inclinaison (2, 2') par rapport à la verticale (18) sur la base de la hauteur relative spécifique (h) et de la distance fixe et définie (7) des capteurs de pression l'un par rapport à l'autre et
o pour déterminer la hauteur relative dans le sens de la gravité et l'angle d'inclinaison également sur la base des températures mesurées, en particulier sur la base d'une différence de température mesurée.

2. Capteur d'inclinaison selon la revendication 1, cependant qu'il est également tenu compte lors de la détermination de l'angle d'inclinaison d'un gradient de température qui existe dans le liquide de liaison entre les deux capteurs de pression.

3. Capteur d'inclinaison selon l'une des revendications 1 à 2, comprenant de plus un synchroniseur et **caractérisé en ce que** les capteurs de pressions et/ou les capteurs de température sont reliés électriquement l'un à l'autre, le synchroniseur étant configuré
o pour synchroniser au moyen d'un signal de déclenchement un premier instant de mesure auquel le premier capteur de pression et/ou de température mesure avec un second instant de mesure auquel le second capteur de pression et/ou de température mesure ou
o pour synchroniser dans le temps des pressions hydrostatiques et/ou des températures mesurées de manière asynchrone par les capteurs de pression et/ou de température,
cependant que les pressions hydrostatiques et/ou les températures mesurées peuvent être associées sur la base d'un même instant de mesure commun.

4. Capteur d'inclinaison selon l'une des revendications 1 à 3, cependant
o qu'une première paire de capteurs de pression présente au moins un autre premier et un autre second capteur de pression et
o que le processeur est configuré pour faire la moyenne des pressions hydrostatiques mesurées par les premiers capteurs de pression et pour faire la moyenne des pressions hydrostatiques mesurées par les seconds capteurs de pression et pour déterminer un angle d'inclinaison sur cette base.

5. Capteur d'inclinaison selon l'une des revendications 1 à 4, le récipient de liquide étant un tube ou un tuyau flexible (3') avec deux extrémités opposées et le premier capteur de pression (5) étant placé à l'une des extrémités et le second capteur de pression (6) étant placé à l'autre extrémité opposée à la première du tube ou du tuyau flexible.

6. Capteur d'inclinaison selon la revendication 5 comprenant de plus un boîtier (8) qui présente le tube ou le tuyau flexible (3'), les capteurs et le processeur, la relation de position et la distance des capteurs de pression l'un par rapport à l'autre étant fixée et définie par le boîtier.

7. Capteur d'inclinaison selon l'une des revendications 5 à 6, le tuyau flexible étant un tuyau spiralé avec deux extrémités opposées et le premier capteur de pression étant placé à l'une des extrémités et le second capteur de pression étant placé à l'autre extrémité opposée à la première du tuyau spiralé.

8. Capteur d'inclinaison selon la revendication 7 comprenant de plus un boîtier télescopique (11) qui présente le tuyau spiralé, les capteurs et le processeur, cependant que
o la relation de position et la distance (13, 13') des capteurs de pression l'un par rapport à l'autre est fixée et définie par le boîtier télescopique (11),
o le boîtier télescopique (11) présente principalement deux parties de boîtier ( 12, 12') et chaque partie de boîtier fixe l'une des deux extrémités du tuyau spiralé et un capteur de pression et
o les deux parties de boîtier sont déplaçables l'une par rapport à l'autre le long d'un axe commun à des positions définies.

9. Capteur d'inclinaison selon l'une des revendications 1 à 4, comprenant de plus d'autres paires de capteurs de pression (14, 14', 15, 15'), les paires de capteurs de pression étant placées sur des axes de paires de capteurs de pression (16, 17) placés à un angle défini l'un par rapport à l'autre, en particulier étant orthogonaux l'un par rapport à l'autre et
o le processeur étant de plus configuré
i. pour déterminer par paires une hauteur relative dans le sens de la gravité entre deux capteurs de pression de chaque paire de capteurs de pression sur la base de pressions hydrostatiques mesurées par les deux capteurs de pression, cependant que les pressions hydrostatiques mesurées par les deux capteurs de pression de chaque paire peuvent être associés à un même instant de mesure commun par le processeur et
ii. pour déterminer au moins un angle d'inclinaison (19, 19') par rapport à la verticale sur la base d'une hauteur relative spécifique déterminée par paire pour une paire de capteurs de pression et de la distance fixe et définie des deux capteurs de pression de la paire de capteurs de pression l'un par rapport à l'autre.

10. Capteur d'inclinaison selon la revendication 9,
o le récipient de liquide étant configuré en forme de disque ou de plaque (20) et présentant deux surfaces principales majoritairement parallèles l'une à l'autre et
o les capteurs de pression d'une paire de capteurs de pression étant placés sur un centre du récipient de liquide configuré en forme de disque ou de plaque en face l'un de l'autre sur la zone marginale de celui-ci.

11. Capteur d'inclinaison selon la revendication 9,
o le récipient de liquide étant configuré en forme de tore (21) et présentant un axe de rotation et
o les capteurs de pression d'une paire de capteurs de pression étant placés l'un en face de l'autre par rapport à l'axe de rotation dans la zone d'une périphérie extérieure du récipient de liquide en forme de tore.

12. Capteur d'inclinaison selon la revendication 9,
o le récipient de liquide étant configuré en forme de sphère (22) et présentant un centre de sphère et
o les capteurs de pression d'une paire de capteurs de pression étant placés l'un en face de l'autre par rapport au centre de la sphère sur la zone marginale de celui-ci.

13. Capteur d'inclinaison selon la revendication 9,
o les autres paires de capteurs de pression correspondant à une seconde et à une troisième paire de capteurs de pression avec un troisième, un quatrième, un cinquième et un sixième capteur de pression,
o le récipient de liquide étant configuré en forme de dé (23), présentant en particulier six faces de dé et un centre de dé et
o les capteurs de pression d'une paire de capteurs de pression étant placés l'un en face de l'autre par rapport au centre du dé dans la zone des faces de dés et chaque capteur de pression étant associé à une face de dé.

14. Capteur d'inclinaison selon la revendication 13, le récipient de liquide en forme de dé présentant un canal de liaison rempli de liquide de liaison qui est conçu pour relier les capteurs de pression d'au moins une paire de capteurs de pression via le liquide de liaison, en particulier pour relier les capteurs de pression des trois paires de capteurs de pression l'une à l'autre via le liquide de liaison, le canal de liaison présentant trois canaux partiels de liaison (24, 25, 26) et respectivement deux capteurs de pression d'une paire de capteurs de pression étant associés à chaque canal partiel de liaison et les canaux partiels de liaison étant conçus pour relier les deux capteurs de pression de la paire de capteurs de pression respectivement associée via le liquide de liaison, en particulier les trois canaux partiels de liaison étant placés en étant perpendiculaires l'un à l'autre.

15. Capteur d'inclinaison selon l'une des revendications 1 à 14, comprenant de plus un pressuriseur, le pressuriseur étant configuré
o pour ajuster et maintenir constante une pression de base dans le récipient de liquide et/ou
o pour compenser et/ou limiter une surpression ou une dépression dans le récipient de liquide par rapport à une pression d'air extérieure.
